# EUROPEAN PATENT APPLICATION

(11) **EP 4 155 838 A1**
(43) Date of publication of application: **29.03.2023**
(21) Application number: 21205363.1
(22) Date of filing: 28.10.2021
(51) Int. Cl.: G05B 9/03, G05B 19/042

(54) **DEVICE CONTROL SYSTEM AND SAFETY MONITORING METHOD FOR CONTROLLING A DEVICE**

(30) Priority: 28.09.2021 EP 21199571
(71) Applicant: Siemens Aktiengesellschaft, 80333 München (DE)
(72) Inventor: The designation of the inventor has not yet been filed
(74) Representative: Siemens Patent Attorneys

(57) **Abstract**

The invention relates to a system and method for controlling a device, especially with regard to safe operation of the device. The solution is based on heterogeneous computing units which control actuators of the device. The computing units execute heterogeneous safety functions each of which processes measurement data of sensors of a heterogeneous sensor system. The processing results are compared with each other to achieve insight into the safety situation of the device.

## Description

The invention relates to a system and method for controlling a device, especially with regard to safe operation of the device.

Errors in the operation of devices, e.g. mechanical machines, for example robots or industrial trucks, need to be detected and mitigated reliably to prevent damage to equipment in the environment of the device and injury to humans. In future, operation of such machines will include complex motions and tasks requiring significant complexity in the computing platforms, including hardware and operating system components controlling such machines. The complexity of future motions and tasks is such that the machines are labeled as intelligent. However, the behavior of such systems is difficult to predict reliably, hence it is difficult to reliably detect and mitigate errors.

The problem is not fully solved in the prior art, e.g. indicated by the absence of fully autonomous vehicles on public roads. Related solutions in the prior art are related to autonomous mobile robots, robotic arms, and existing level 4 autonomous vehicle control systems.

For autonomous mobile robots, a solution would rely on physically separating the safety system of the device from the device's control system responsible for complex motions and tasks. Concretely, the safety system might contain dedicated sensors, controllers, and actuators that stop or slow the robot to prevent collisions. The entire system, down to its individual components, is proven safe by detailed analysis. The controller is an industrial safety controller, programmed in a limited-variability language missing typical features of even C. This approach is no longer feasible if complex behavior such as choosing safe paths based on existing motion vectors in the environment or even predictions of such motion vectors based on the recognition of agents and anticipation of their agendas is required.

Robotic arms are similarly controlled, the difference being that the safety subsystem restricts torque in addition to velocity if obstacles, such as humans, are detected in the environment. It is currently not possible for humans to work alongside robotic arms moving at the full speed and torque that these robots are capable of.

Existing level 4 autonomous vehicle control systems solve complex tasks such as left turns at a traffic light already today. However, they require humans ready to take control as soon as conditions become adverse and they typically rely on a large set of sensors, where one part of the sensor subsystem is again separated off and simplified to provide collision prevention that is proven safe by detailed analysis down to the level of individual components.

A recent approach to enable higher performance in combination with a safety certification is to combine different computing cores on one die. Two products following such approaches are Intel's Elkhart Lake CPUs and Texas Instrument's AM654x/AM652x Sitara^{™} CPUs. Both product families combine performance cores with dedicated cores used for safety monitoring or even execution of a safety function. However, such architectures are highly vendor specific and extremely complex to develop for. Hence, they lead to high non-recurring engineering cost for the safety functions and a vendor lock-in for companies using such CPUs for their robotic systems.

Therefore, a solution is required which serves the need to enable safe operation of a full- or part-autonomously operated device. This is solved by the system suggested in claim 1 and by the method as per claim 18.

A device control system for controlling an at least partly autonomous device comprises a computation system for controlling one or more actuators of an actuator system of the device. The computation system is embodied as a heterogeneous, redundant computation system and comprises at least a first CU1 and a second computing unit CU2. All computing units CUi with i=1,2,...,I of the computation system, i.e. at least the first and the second computing units CU1, CU2, are connected to the actuator system for providing respective one or more control signals for controlling the actuators of the actuator system. In case the computation system comprises further computing units CUx with x>2, the same is applicable for those additional computing units.

The heterogeneity of the computation system essentially means that the computing units are of different type. Furtheron, the heterogeneity implies that the computational hardware and software of the computing units are architecturally different on the corresponding two units. The heterogeneity of the computing units ensures that not both computing units will be impacted by the same latent error at the same time, so even in the presence of latent errors in both computing units, the safety function will engage with the highest degree of confidence because any unsafe situation is identified on at least one computing unit. Redundancy of the computation system means that different computing units of the computation system can execute the same function, e.g. a safety function SF. Such safety function can be executed on both units to ensure that the safety function is not affected by the same error in underlying platforms in both units at the same time.

The computing units CUi need not be safe themselves, alleviating the need for detailed analysis down to the level of individual components.

Each computing unit CUi with i=1,2,... can be configured to generate output data ODi by executing a respective comprehensive safety function SFi, wherein such safety function SFi of a respective computing unit CUi processes input data IDi provided to the respective computing unit CUi to generate the respective output data ODi.

Preferably, each comprehensive safety function SFi can contain one or even more sub-safety-functions SFi_y with y=1,2...,Yi and Yi≥1 for a respective computing unit CUi, wherein Yi might be different for different computing units CUi. Correspondingly, here and in the following the expression "executing a safety function SFi" actually stands for "executing the sub-safety-functions SFi_y of safety function SFi". For a given computing unit CUi, the respective sub-safety-functions SFi_y of that computing unit CUi might be selected from a group of homogeneous and/or from a group of heterogeneous, redundant sub-safety-functions.

Thus, the entirety of sub-safety-functions SFi_y of a safety function SFi of a computing unit CUi might form a group of homogeneous sub-safety-functions or form a group of heterogeneous, redundant sub-safety-functions or form a group of both homogeneous sub-safety-functions and heterogeneous, redundant sub-safety-functions.

For example, in a first variant each computing unit CUi with i=1, 2,... might be configured to the provide output data ODi by redundantly executing sub-safety-function SFi_y from the group of homogeneous sub-safety-functions. With regard to such a function to be executed by the computing units, homogeneity implies that the algorithms corresponding to the function are equivalently realized, such as the same source code turned into object code by different compilers for each heterogeneous type of computing unit. This first variant is advantageous if the safety function algorithms are simple enough to prove the safety of the algorithms beyond doubt, because discrepancies in the results of the safety functions are easy to identify.

In a second variant, the computing units CUi with i=1,2,... might be configured to provide output data ODi by executing heterogeneous, redundant sub-safety-functions SFi_y. With regard to a function to be executed by the computing units, heterogeneity implies that the algorithms corresponding to the function are differently realized, such as neural networks trained on diverse data sets or with different training algorithms or a support vector machine and a deep neural network. Thus, different computing units use safety functions with differently realized algorithms. This second variant is advantageous if the safety function algorithms cannot be proven correct while it is possible to prove that there is no input data on which all safety functions are unsafe.

The computing units CUi can be configured to generate the one or more control signals for controlling the actuators of the actuator system as a function of the output data ODi generated by the respective safety function SFi.

The computing units CUi can be connected to each other by a communication connection or a suitable network of the device control system for exchange of input data IDi, IDj and/or output data ODi, ODj.

In a possible embodiment, the computation system comprises at least a third safety computing unit CU3, wherein an output O1 of the first computing unit CU1 and an output O2 of the second computing unit CU2 are connected to the third computing unit CU3 via the communication connection to share respective states of the first computing unit CU1 and the second computing unit CU2, wherein the computation system is configured such that the third computing unit CU3 is deactivated in case of concurrent pre-defined states of the outputs of the first CU1 and second computing units CU2. I.e. in case the output O1 of CU1 is in a given, predefined status and at the same time the output O2 of CU2 is also in a given, predefined status, the third computing unit CU3 would be deactivated.

The communication connection includes a connection of at least one output O1 of the first computing unit CU1, which is connected to the actuator system for providing the respective control signal and for controlling the actuator, respectively, to at least one input I2 of the second computing unit CU2. The second computing unit CU2 is configured to observe the status of the output O1 of the first computing unit CU1 and to initiate a safety measure in case the observed status of output O1 deviates from an expected status and/or enters a predefined status.

The device control system, preferably the first computing unit CU1 itself, can be configured to temporarily switch the status of the output O1 of the first computing unit CU1 to the predefined status, wherein the predefined status is selected such that it would cause the actuator system to change its actuation status. Such temporary switching is executed, preferably during regular operation of the device control system, sufficiently short in time, so that it does actually not cause the actuator system to change its actuation status, and sufficiently long lasting, so that the second computing unit CU2 can detect that the output O1 is in the predefined status.

Moreover, the device control system can be configured to execute a testing mode in which the computation system and the first computing unit CU1, respectively, is configured to switch the status of the output O1 of the first computing unit CU1 to a safe state, wherein such safe state represents the expected status mentioned above. The second computing unit CU2, observing the first computing unit CU1 and its output O1, is then configured to initiate the safety measure in case the observed status of the output O1 does not correspond to a safe state.

The device control system can comprise a sensor system with a plurality of sensors SENs with s=1,2,...,S and with S being the total number of sensors SENs of the sensor system. The sensors SENs are configured to provide measurement data MDs and wherein the computing units CUi of the computation system are assigned and connected to the sensor system via one or several data connections for receiving the measurement data MDi from the sensors SENs, wherein different computing units CUi of the computation system are preferably assigned and connected to different sensors Si of the sensor system to receive measurement data MDi from the sensors Si as input data IDi for the respective computing unit CUi.

The sensor system can be a heterogeneous sensor system, wherein different sensors Si of the heterogeneous sensor system are of different type. Thus, heterogeneity of the sensor system means that different sensors are of different type.

Each computing unit CUi is configured to share or distribute, respectively, over the communication connection various kinds of data Di, especially input IDi and/or output data ODi. Especially, each computing unit CUi is configured to share or distribute, respectively, a representation RMDi of the measurement data MDi received as input data IDi from the sensor system and the sensor Si connected to that computing unit CUi, respectively, with all other computing units CUj with j≠i of the computation system. Therein, the shared representation RMDi of the measurement data MDi is preferably the measurement data MDi itself, i.e. RMDi=MDi, i.e. unprocessed measurement data MDi received from the respective sensor Si and the sensor system, respectively. Alternatively, the shared representation RMDi can be a result piMDi of a processing of such measurement data MDi. For example, such result piMDi of processing might be the result of the processing of the measurement data MDi with the respective safety function SFi, i.e. RMDi=piMDi=SFi(MDi), i.e. in this example the processing pi corresponds to the execution of the safety function SFi. The processing pi of measurement data MDi in the computing unit CUi might also include some other processing or pre-processing of measurement data MDi, but the application scenario addressed herein concerns the implementation of the processing pi as safety function SFi.

Each computing unit CUi can be configured to execute its safety function SFi to process measurement data MDi directly received from the sensor system, e.g. from the one or more sensors SENs assigned to the particular computing unit CUi, to generate processed measurement data piMDi=SFi(MDi) and/or to process data Dj with j≠i received from an other computing unit CUj to generate further processed measurement data piMDj=SFi(MDj). For example, the data Dj might be a shared representation RMDj received from the other computing unit CUj to generate further processed measurement data piMDj=SFi (MDj).

In case the input data IDi to be processed by the safety function SFi consists of several independent data sets, e.g. measurement data MDi indeed intended for the respective computing unit CUi as well as data Dj received from an other computing unit CUj, e.g. RMDj, different data sets might be processed by different sub-safety-functions SFi_y of the safety function SFi.

The first computing unit CU1 and the second computing unit CU2 can be configured such that both the first computing unit CU1 and the second computing unit CU2 execute their respective safety functions SF1, SF2 to process measurement data MD1 received by the computation system from a sensor SEN1 of the sensor system assigned to the first computing unit to generate first processed measurement data p1MD1=SF1(MD1) and second processed measurement data p2MD1=SF2(MD1), respectively, wherein the first processed measurement data p1MD1=SF1(MD1) and the second processed measurement data p2MD1=SF2(MD1) are compared with each other, especially to determine the integrity of the computing units CU1, CU2 and of the communication connection.

The first computing unit CU1 and the second computing unit CU2 can be furthermore configured such that both the first computing unit CU1 and the second computing unit CU2 execute their respective safety functions SF1, SF2 to process measurement data MD2 received by the computation system from a sensor SEN2 assigned to the second computing unit CU2 to generate third processed measurement data p2MD2=SF2(MD2) and fourth processed measurement data p1MD2=SF1(MD2), respectively. Subsequently, the third processed measurement data p2MD2=SF2(MD2) and the fourth processed measurement data p1MD2=SF1(MD2) are compared with each other, especially to determine the integrity of the computing units CU1, CU2 and of the communication connection, and/or the first processed measurement data p1MD1=SF1(MD1) and the third processed measurement data p2MD2=SF2(MD2) are compared with each other, especially with regard to overlapping measurement ranges and measurement zones of the sensors S1 and S2 and especially to test the sensor functions of the sensors S1, S2, and/or the second processed measurement data p2MD1=SF2(MD1) and the fourth processed measurement data p1MD2=SF1(MD2) are compared with each other, especially with regard to overlapping measurement ranges and measurement zones of the sensors S1 and S2 and especially to test the sensor functions of the sensors S1, S2.

As a result, the control signal to the actuator system is adjusted according to the one or more results of the mutual comparisons of the first, second, third, and/or fourth processed measurement data.

The device control system can be configured to execute a test mode in which instead of real measurement data MD1 and MD2, respectively, a first test pattern PAT1 is fed as measurement data MD1=PAT1 to the first computing unit CU1, the first computing unit CU1 is configured to execute its safety function SF1 to process the first test pattern PAT1 to generate a second test pattern PAT2=p1PAT1=SF1(PAT1), and the second test pattern PAT2 is used by the second computing unit CU2 to detect inconsistency of the first computing unit CU1. Such a test patterns PAT1 can be artificial or previously measured sensor measurement data corresponding to measurement data MD1 which a sensor SEN1 which is assigned to computing unit CU1 would provide in a given scenario.

The device control system can be configured to execute a check mode in which the sensor system is subjected to a sensory stimulus from the device's environment such that the sensors SENs provide measurement data MDs=PAT1 corresponding to the sensory stimulus to the computing units CUi. Each computing unit CUi executes its safety function SFi to process the provided measurement data MDi=PAT1 to generate processed measurement data piMDi=SFi(MDi)=SFi(PAT1) and generates an adjustment for the one or more control signals for controlling the one or more actuators of the actuator system according to the computing unit's CUi generated processed measurement data piMDi=SFi(Mdi)=Sfi(PAT1). The device control system is further configured to initiate a safety measure in case the adjustments of any computing unit is outside an expected range.

In case the adjustment is a concrete value for controlling the actuator system, e.g. a voltage or similar, the threshold can be, for example, 5%. Depending on the safety requirements, such threshold can be lower or higher. In case the computing units CUi are not configured to provide such concrete value to the actuator system but only an assessment whether or not an actuation status of the actuator system has to be changed, i.e. the control signals provide by the computing units are of Boolean type, the threshold would be considered to be exceeded in case such provided assessment of the respective computing unit CUi expresses the necessity to change the actuation status of the actuator system.

The essential aspect herein would be that all computing units CUi required for safe operation show a significant reaction to the sensory stimulus which would result in a change of the actuation status. In case fewer computing unit CUi shows a reaction in the form of a significant adjustment, the safety measure would be initiated.

The device control system can furthermore be configured to execute the check mode concurrently to a regular operation of the device control system so that the regular operation, e.g. an ongoing operation or mission of the device, does not have to be interrupted.

The device control system can be configured to execute the check mode such that regular operation of the device after execution of the check mode is enabled only in case the processed measurement data piMDi=SFi(MDi) of all computing units CUi required for safe operation matches with the predefined sensory stimulus. Therein, "matching" is achieved in case the result of the processing piMDi=SFi(MDi) corresponds to an assumed result of such processing which can indeed be assumed since the sensory stimulus is predefined and well known so that the result of the processing can be simulated. In case the processing during check mode deviates from the simuation, regular operation might be critical.

A safety monitoring method SMM for controlling a device according to the above comprises a first step SMM1 in which the first computing unit CU1 receives measurement data MD1 from its sensor S1, a second step SMM2 in which the first computing unit CU1 shares the data MD1 with the second computing unit CU2, a third step SMM3 in which both the first computing unit CU1 and the second computing unit CU2 execute their respective safety functions SF1, SF2 to process the measurement data MD1 to generate first processed measurement data p1MD1=SF1(MD1) and second processed measurement data p2MD1=SF2(MD1), respectively, a fourth step SMM4 in which the first processed measurement data p1MD1=SF1(MD1) and the second processed measurement data p2MD1=SF2(MD1) are compared with each other, a fifth step SMM5 in which the one or more control signals to the actuators are adjusted according to the result of the mutual comparison of the first and the second processed measurement data.

Furtheron, the first step SMM1 can additionally include that the second computing unit CU2 receives measurement data MD2 from its sensor S2, the second step SMM2 can additionally include, that the second computing unit CU2 shares the data MD2 with the first computing unit CU1, the third step SMM3 can additionally include that both the first computing unit CU1 and the second computing unit CU2 execute their respective safety functions SF1, SF2 to process the measurement data MD2 to generate third processed measurement data p2MD2=SF2(MD2) and fourth processed measurement data p1MD2=SF1(MD2),respectively, the fourth step SMM4 can additionally include that the third processed measurement data p2MD2=SF2(MD2) and the fourth processed measurement data p1MD2=SF1(MD2) are compared with each other, and/or the first processed measurement data p1MD1=SF1(MD1) and the third processed measurement data p2MD2=SF2(MD2) are compared with each other, and/or the second processed measurement data p2MD1=SF2(MD1) and the fourth processed measurement data p1MD2=SF1(MD2) are compared with each other, the fifth step SMM5 can additionally include that the one or more control signals to the one or more actuators are adjusted according to the one or more results of the mutual comparisons of the first, second, third, and/or fourth processed measurement data.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:
- FIG 1: shows an autonomous device in a first embodiment,
- FIG 2: shows the autonomous device in a second embodiment,
- FIG 3: shows a safety monitoring method.

The invention relates to a system and method for controlling a device, especially with regard to safe operation of the device.

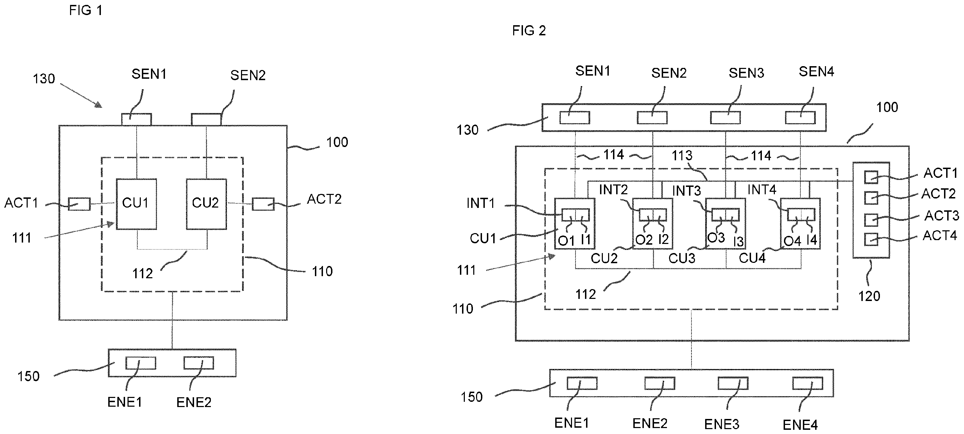

FIG 1 shows a device 100 with a device control system 110. The device control system 110 comprises a heterogeneous, redundant computation system 111 with computing units CU1, CU2 for controlling one or more actuators ACT1, ACT2 of an actuator system 120 of the device 100 as well as a sensor system 130. The computation system 111 shown in FIG 1 comprises only two computing units CU1, CU2 which are directly assigned to certain sensors SEN1, SEN2 of the sensor system 130 and to certain actuators ACT1, ACT2 of the actuator system 120. However, the computation system 111 would typically comprise a plurality of computing units CUi with i=1,2,...I with I being the total number of computing units CUi and typically I>2, depending on the complexity of the device control system 110. Similarly, the actuator system 120 would typically comprise a plurality A of actuators ACTa with a=1,2,...,A and A being the total number of actuators ACTa of the actuator system 120 and the sensor system 130 typically comprises a plurality S of sensors SENs with s=1,2,...,S and with S being the total number of sensors SENs of the sensor system 130. This is shown in FIG 2 for a heterogeneous, redundant computation system 111 with I=4, for an actuator system 120 with A=4, and for a sensor system 310 with S=4. Therein, the number S of sensors SENs, the number I of computing units CUi, and the number A of actuators ACTa can be, but don't have to be the same. For example, it might be reasonable if the measurement data MDi provided to a computing unit CUi come from more than one sensor SENs.

For example, the device control system 110 can be a safety sub-system of a superordinate control system of the device 100, being responsible for ensuring safe operation of the device 100. The device 100 might be embodied as a full- or at least part-autonomously operated mobile vehicle. Alternatively, the device 100 might be embodied as a full- or at least part-autonomously operated robot, e.g. a "cobot" (collaboration robot). In any case, the computation system 111 might be the safety related sub-system of a superordinate control system of the device 100, e.g. the device control system 110. In a preferred embodiment, the computation system 111 combines the safety subsystem and the superordinate control system.

Here and in the following, the heterogeneity of the computation system 111 essentially means that at least some of the computing units CUi are of different type. Furtheron, the heterogeneity implies that the computational hardware and software of at least some different computing units CUi are architecturally different. A concrete example of two computing units CUi that could be used as heterogeneous, redundant computation channels would be the operating system Zephyr running on an Intel CPU with AMD64 instruction set and an RTLinux operating system running on a chip with the A64 instruction set and an ARMv9 architecture. The heterogeneity of the computing units CUi ensures that not both platforms are impacted by the same latent error at the same time, so even in the presence of latent errors in both platforms, the safety function SFi as introduced below will always engage because any unsafe situation is identified on at least one platform and computing units, respectively.

Here and in the following, redundancy of the computation system 111 means that at least some of the computing units CUi of the computation system 111 can execute the same function, e.g. a safety function SFi. Such safety function SFi can be executed on different computation units CUi, CUj with i≠j to ensure that the safety function SFi is not affected by the same error in underlying platforms in both units CUi, CUj at the same time. This implies that the two computing units CUi, CUj should be at least similar in terms of a minimum performance requirement: They should both be able to cyclically run the safety functions SFi at the frequency required by the operation of the device.

The computing units CUi are connected to the actuator system 120 via one or several control connections 113 for providing respective control signals via their outputs Oi for controlling respective ones of the actuators ACTa of the actuator system 120. This architecture allows that the control of an actuator, e.g. actuator ACT1, which is by default executed by a particular computing unit, e.g. CU1, can be transferred from CU1 to, for example, CU2 so that CU2 can replace CU1. The same is of course applicable for all computing units CUi and all actuators ACTa of the actuator system 120. Preferably, an actuator ACTa is connected to each computing unit CUi. This enables physically entering a safe state even if there is only a single safety actuator ACTa and only one computing unit CUi identifies an unsafe state. It also enables smart actuators / downstream controllers to judge consistency of two computing units externally to, for example, emit a warning or to lock a safe state even beyond the signaling of the safe state from either computing unit CUi.

In a possible embodiment, the function of the control connections 113 can be realized by usage of the communication connection 112. In that case the communication connection 112 would also connect the respective outputs Oi of the computing units CUi, which output the control signals for controlling the actuators ACTa, with the actuator system 120. Two or more computing units CUi, e.g. CU1, CU2, can be connected to the same actuator ACTa, e.g. ACT1, of the actuator system 120 for providing respective control signals for controlling the actuator ACT1 to achieve redundancy and safe operation. Alternatively, two different computing units CU1, CU2 can be connected to different actuators ACT1, ACT2 of the actuator system 120 for providing respective control signals to the different actuators ACT1, ACT2 for controlling the actuators ACT1, ACT2, wherein the different actuators ACT1, ACT2 are preferably redundant actuators. Redundant actuators ACT1, ACT2 are configured and arranged such that a first one of the redundant actuators can replace the function of the other, second one of the redundant actuators in the device control system 110 in case the second actuator loses function, e.g. in case of failure, maintenance, or for other reasons. Thus, "redundant actuators" refers to actuators which are configured and arranged such that they can actuate the same component of the device, but only a first one of the redundant actuators works at a time while the other actuator is only used in case the first actuator is not working, e.g. due to failure, maintenance, or any other reason. However, only one actuator is required to bring the device into a safe state or safely end the device's mission. An actuator ACTa can be, for example, a brake, a vehicle drive system, a motor of a robot arm of a robot, etc. Also, an actuator might be an electric contactor which is configured to switch on and off a current for an apparatus, e.g. a laser, or it can be a valve or some servo motor. Essentially, the actuators ACTa can be of any kind.

Moreover, the computing units CUi of the computation system 111 are connected to the sensor system 130 via one or several data connections 114. The sensors SENs are configured to generate and provide measurement data MDs and the computing units CUi of the computation system 111 are connected to the sensor system 130 to receive measurement data MDi from the sensor system 130 as input data IDi for the respective computing unit CUi. Different computing units CUi of the computation system 111 are preferably connected to different sensors SENs of the sensor system 130. Preferably, different sensors SENs of the sensor system 130, e.g. SEN1, SEN2, are of different type. Just for example, in case of distance measurements the sensor SENs connected to the first computing unit CU1 might be a Lidar sensor and the sensor SENt connected to the second computing unit CU2 might be an ultrasound sensor. In practice, a heterogeneous sensor system 130 might comprise sensors SENs which apply the same principle of measurement, but which have different mechanical structure, e.g. one sensor SEN1 being embodied as a Lidar sensor with a movable mirror and the other sensor SEN2 being embodied as a Lidar sensor with movable LED light source. Different sensors SENs, SEnt of the sensor system 130 have at least partially overlapping measurement areas, including measurement ranges and/or measurement zones. For example, partially overlapping measurement ranges and zones, respectively, can be achieved with an ultrasound sensor with a range of approximately one to eight meters and a Lidar sensor with a range of five to twenty meters. Besides the overlapping range, it is considered reasonable to align the sensors SENs such that their field of views (FoV) overlap at least partly. For example, the FoV of an ultrasound sensor is the spatial area into which the ultrasound signal is emitted and the FoV of a Lidar sensor is the spatial area which is scanned by the laser. Preferably, different computing units CUi, CUj of the computation system 111 receive respective measurement data MDi, MDj from different sensors SENs, SENt of the sensor system 130.

As another example, a Lidar sensor and a Sonar sensor array could be paired to have overlapping detection areas. If either sensor fails to detect an obstacle detected by the other sensor in the area of overlap, the device could emit a warning, reduce performance, or enter a safe state. In a preferred implementation, each sensor would be connected to a different computing unit. In a variation, each computing unit would maintain a record of detection failures and detection successes, and would only emit a warning, reduce performance, or enter the safe state based on a performance indicator derived from the record, such as if the joint detection percentage over the last hour of operation is below 95%.

The device control system 110 can furthermore comprise a redundant, heterogeneous energy supply system 150 with a plurality of energy supplies ENEe with e=1,2,...,E. Heterogeneity of the energy supply system 150 means that different energy supplies ENEe, ENEf with e≠f are of different type. Different computing units CUi of the computation system 111 are supplied with energy from different energy supplies ENEe of the energy supply system 150. Just for example, the energy supply ENE1 might be a switching power supply and the energy supply ENE2 might be using a linear power supply. Alternatively, but still only as an example, both energy supplies might be switching power supplies, but provided from different manufacturers and therefore not identical to each other. For example, redundancy and heterogeneity of the energy supply system 150 help to counteract a systematic error where two homogeneous power supplies deliver overvoltage sufficient to overpower digital output isolation and freeze digital outputs from corresponding computing units CUi on "high" concurrently.

The computing units CUi of the computation system 111 are connected with each other for transfer of any kind of data D via a communication connection 112. The communication connection 112 realizes connections of inputs Ii and outputs Oi of the computing units CUi with i=1,2,...,I with each other. Thus, an input Ii of computing unit CUi is connected to an output Oj of computing unit CUj for all i, j. Each computing unit CUi comprises an interface INTi with an input Ii and an output Oi for receiving and providing data, respectively. For example, data D received through the respective input Ii of a computing unit CUi can be measurement data MDi from the sensor system 130 or any kind of data Dj provided by an other computing unit CUj of the computation system 111. Data Di provided through a respective output Oi of a computing unit CUi can be the computing unit's control signals for the actuator system 120 as well as processed or unprocessed measurement data RMDi of the computing unit CUi. Correspondingly, the interfaces INTi are connected to connections 112, 113, 114 to receive and send respective data.

The computing units CUi are especially configured to generate and provide output data ODi by executing comprehensive safety functions SFi, wherein a safety function SFi of a respective computing unit CUi processes input data IDi provided to the respective computing unit CUi via its input Ii to generate the respective output data ODi which can be provided via its respective output Oi. Thus, each computing unit CUi hosts a safety function SFi specific for that computing unit CUi.

In more detail, each comprehensive safety function SFi can contain one or even more sub-safety-functions SFi_y with y=1,2...,Yi and Yi≥1 for a respective computing unit CUi, wherein Yi might be different for different computing units CUi. Correspondingly, here and in the following the expression "executing a safety function SFi" actually stands for "executing the sub-safety-functions SFi_y of safety function SFi". For a given computing unit CUi, the respective sub-safety-functions SFi_y of that computing unit CUi might be selected from a group of homogeneous and/or from a group of heterogeneous, redundant sub-safety-functions. Thus, the entirety of sub-safety-functions SFi_y of a safety function SFi of a computing unit CUi might form a group of homogeneous sub-safety-functions or form a group of heterogeneous, redundant sub-safety-functions or form a group of both homogeneous sub-safety-functions and heterogeneous, redundant sub-safety-functions.

For example, in a first variant each computing unit CUi with i=1,2,... might be configured to the provide output data ODi by redundantly executing sub-safety-function SFi_y from the group of homogeneous sub-safety-functions. In a second variant, the computing units CUi with i=1,2,... might be configured to provide output data ODi by executing heterogeneous, redundant sub-safety-functions SFi_y. With regard to such a function to be executed by the computing units CUi, homogeneity implies that the algorithms corresponding to the function are equivalently realized, such as the same source code turned into object code by different compilers for each heterogeneous type of computing unit CUi. Again with regard to a function to be executed by the computing units CUi, heterogeneity implies that the algorithms corresponding to the function are differently realized, such as neural networks trained on diverse data sets or with different training algorithms or a support vector machine and a deep neural network. Thus, different computing units CUi, CUj use safety functions SFi, SFj with differently realized algorithms.

As indicated, the safety functions SFi of the computing units CUi can process the measurement data MDi received from the sensor system 130 to generate processed measurement data RMDi. I.e. the input data IDi for a computing unit CUi and for its safety function SFi for further processing can be, for example, the measurement data MDi received by CUi from one or more sensors SENs of the sensor system 130 assigned to that computing unit CUi. For example, the safety function SF1 of the first computing unit CU1 processes received measurement data MD1 to generate new data p1MD1=SF1(MD1). Correspondingly, the safety function SF2 of the second computing unit CU2 processes the measurement data MD2 to generate new data p2MD2=SF2(MD2).

Besides processing the measurement data MDi received from the sensor system 130, a safety function SFi can also process any kind of data Dj provided via the communication connection 112, e.g. from one or more of the other computing units CUj with j≠i, resulting in piDj=SFi(Dj). Such data Dj can be, for example, a shared representation RMDj received from the other computing unit CUj. For example, in case the first safety function SF1 of a first computing unit CU1 processes measurement data MD2 received at a second computing unit CU2 from the sensor system 130, the result of such processing at the first computing unit CU1 would be p1MD2=SF1(MD2). For that processing purpose, the data MD2 would be provided as output data OD2 of the second computing unit CU2, transferred to the first computing unit CU1 via the communication connection 112, and received at the first computing unit CU1 as input data ID1. Of course, the equivalent transfer of data MD1 from the first computing unit CU1 to the second computing unit CU2 and processing of such data at the second computing unit CU2 is a possible and actually a preferred implementation.

Consequently, each computing unit CUj is configured to share or distribute, respectively, any suitable kind of data Dj via the communication connection 112 with other computing units CUi of the computation system 111. The data Dj provided by computing unit CUj for processing by an other computing unit CUi can be the unprocessed or processed measurement data MDj received by the providing computing unit CUj. In more general terms, such shared data Dj can be a representation RMDj of the measurement data MDj received as input data IDj from the sensor system 130 at that computing unit CUj. Therein, the representation RMDj can either be the result of some processing of the measurement data MDj, e.g. Dj=pjMDj=SFj(MDj), or it can be the unprocessed measurement data MDj itself, i.e. Dj=MDj. However, the processing pj of measurement data MDj in the computing unit CUj might also include some other processing or pre-processing of measurement data MDj, but the application scenario addressed herein concerns the implementation of the processing pj as safety function SFj.

In case the input data IDi to be processed by the comprehensive safety function SFi consists of several independent data sets, e.g. measurement data MDi indeed intended for the respective computing unit CUi as well as data Dj received from an other computing unit CUj, e.g. RMDj, different data sets might be processed by different sub-safety-functions SFi_y of the safety function SFi.

Summarizing the above, each computing unit CUi of the computation system 111 is configured to execute its safety function SFi to process measurement data MDi received from the sensor system 130, e.g. from one or more sensors SENs assigned to that computing unit CUi, to generate processed measurement data piMDi=SFi(MDi) and/or to process a shared representation RMDj with j≠i received from an other computing unit CUj of the computation system 111 to generate further processed measurement data piRMDj=SFi(RMDj). In other words, each computing unit CUi is integrated into and connected with the computation system 111 and configured such that it executes its safety function SFi to process any input data IDi, wherein such input data IDi might be measurement data MDi received from the assigned one or more sensors SENs and/or data Dj received from an other computing unit CUj of the computation system 111.

The described interconnection of the computation system 111, the actuator system 120, and the sensor system 130 resulting in the ability of a computing unit CUi to process data Dj from other computing units CUj, to observe states of the other computing units CUj, and to control various actuators ACTa of the actuator system 120, preferably in connection with the aforementioned redundancy of the computation system 111, allows that in case any one of the computing units CUi is erroneous, e.g. CU1, an other computing unit CUj, e.g. CU2, can initiate a safety measure, e.g. switching the device 10 or the device control system 110 into a safe state and/or assuming the functions and tasks of the erroneous computing unit CU1. Thus, for example, CU2 might trigger a safe mode of the device 100 or of the device control system 110 or, preferably, of a concerned sub-system of the device 100 due to the erroneous state of computing unit CU1.

For example, the communication connection 112 between the at least two redundant computing units CUi, CUj allows mutual monitoring of the computing units CUi, CUj. On the communication connection 112, input data IDi, e.g. from the sensor system 130, and output data ODi of functions, e.g. the safety functions SFi, which are run on the computing units CUi, and/or the states of the computing units CUi are exchanged. The described interconnection which includes that the output O1 of the first computing unit CU1, which is connected to the actuator system 120 for providing the respective control signal, is connected to at least one input I2 of the second computing unit CU2, allows such mutual monitoring of the computing units CU1, CU2. For that purpose, the second computing unit CU2 is configured to observe the status of the output O1 of the first computing unit CU1 and to initiate the aforementioned safety measure in case the observed status of the output O1 deviates from an expected status and/or enters a predefined status, e.g. an erroneous state.

In one implementation, if any first one CU1 of the computing units CUi is affected by an error, an other, second computing unit CU2 can identify such error by comparing the output data OD1 received from the first unit CU1 via the communication connection 112 with the output data OD2 of the corresponding safety function SF2 running on the second unit CU2. For example, in the case of bitwise disagreements between the outputs of two identical safety functions SF1, SF2, the detecting unit, i.e. in the above scenario the other, second computing unit CU2, would cause the device 100 or the device control system 110, respectively, to initiate a safety measure, e.g. entering a safe state. In the case of disagreements between heterogeneous safety functions SF1≠SF2, the more conservative result might be assumed, or a fusion of the most conservative elements from both results, or, again, a safe state could be entered. Concretely, if one of a pair of heterogeneous safety functions SF1, SF2 identifies a human in five meters distance in the direction of travel of a mobile robot and the other one safety function of the pair SF1, SF2 detects a wisp of smoke at six meters distance, both a human and a wisp of smoke could be assumed to be present.

For testing of such mutual monitoring, still using the example of computing units CU1 and CU2 with CU2 exemplarily observing CU1, the device control system 110, e.g. the computing unit CU1 itself, is configured to temporarily switch the output O1 of computing unit CU1 to a status predefined for testing the mutual monitoring. The predefined status is selected such that it would cause the actuation system 120 and especially the actuator ACT1 controlled by the given computing unit CU1 to change its actuation status, e.g. from "not breaking" to "breaking" or anything else. Since the testing might be applied during regular operation of the device control system 110, the temporary switching is executed sufficiently short in time, so that it does actually not cause the actuation system 120 to change its actuation status. However, the switching is sufficiently long lasting, so that the observing second computing unit CU2 can detect the change of the status of the output O1 and especially the presence of the predefined status, despite only being temporary and relatively short.

In more detail, the first computing unit CU1 might temporarily and possibly regularly switch the output O1 to the predefined status of "zero volts". In practice, such "zero volts" status of a digital output signals a safe state of the respective component. For example, in the case of a safe brake control function connected to digital outputs Oi on each computing unit CUi, each computing unit CUi, e.g. CU1, could reduce the voltage level on the digital output Oi in question, e.g. O1, regularly to "zero" for a time interval short enough not to trigger the brake, but long enough for the other computing unit CUj, e.g. CU2, to register the zero. This ensures detection of errors that make it impossible for a computing unit CUi to set its digital output Oi to zero volts, such as isolation faults. Upon detection of such an error, the detecting computing unit CUj could initiate a safety measure, e.g. trigger the safe state, emit a warning, or continue with reduced performance. The purpose of this measure would be that the second computing unit CU2 can determine whether the first computing unit CU1 is still able to switch into such safe state which would, for example, not necessarily be possible any more in case of a short circuit. In case of an analogue output "zero volts" (0V) is less distinct since 0V does not necessarily mean that a safe mode is applicable. In that scenario, it might be helpful to switch to several voltage levels in short time. Anyway, the configuration of the device control system 110 described above achieves the possibility to check whether a safe mode can be entered and, more generally, whether the first computing unit CU1 is still in control of its outputs. In a preferred embodiment, all computing units CUi of the computation system 111 are thus checked by other computing units CUj.

For another test scenario, the device control system 110 is configured such that both a first computing unit CUi, e.g. CU1, and a second computing unit CUj, e.g. CU2, execute their respective safety functions SF1, SF2 to process measurement data MD1 originally intended to be processed only by the first computing unit CU1, e.g. from sensor SEN1, i.e. received by the computation system 111 from sensor SEN1 assigned to the first computing unit CU1. Such processing by the safety functions SF1, SF2 of the different computing units CU1, CU2 based on measurement data MD1 results in first processed measurement data p1MD1=SF1(MD1) as well as second processed measurement data p2MD1=SF2(MD1). Subsequently, the first processed measurement data p1MD1=SF1(MD1) and the second processed measurement data p2MD1=SF2(MD1) are compared with each other, especially to determine the integrity of the computing units CU1, CU2 and of the communication connection 112.

In more detail, to generate the first processed measurement data p1MD1=SF1(MD1) and second processed measurement data p2MD1=SF2(MD1), the first computing unit CU1 and the second computing unit CU2 are configured such that the first computing unit CU1 receives first measurement data MD1 from the sensor SEN1 assigned to the first computing unit CU1, the first computing unit CU1 executes its safety function SF1 to process the first measurement data MD1 to generate first processed measurement data p1MD1=SF1(MD1), the first measurement data MD1 are shared with the second computing unit CU2 via output O1 and communication connection 112, and the second computing unit CU2 executes its safety function SF2 to process the first measurement data MD1 received via its input I2 to generate second processed measurement data p2MD1=SF2 (MD1) .

In this test scenario, the first computing unit CU1 and the second computing unit CU2 can be furthermore configured such that both the first computing unit CU1 and the second computing unit CU2 execute their respective safety functions SF1, SF2 to process measurement data MD2 originally intended to be processed only by the second computing unit CU2, e.g. from sensor SEN2, i.e. received by the computation system 111 from sensor SEN2 assigned to the second computing unit CU2, to generate third processed measurement data p2MD2=SF2(MD2) and fourth processed measurement data p1MD2=SF1(MD2), respectively. Subsequently, the third processed measurement data p2MD2=SF2(MD2) and the fourth processed measurement data p1MD2=SF1(MD2) are compared with each other, especially to determine the integrity of the computing units CU1, CU2 and of the communication connection, and/or the first processed measurement data p1MD1=SF1(MD1) and the third processed measurement data p2MD2=SF2(MD2) are compared with each other, especially with regard to overlapping measurement ranges and measurement zones of the sensors S1 and S2 and especially to test the sensor functions of the sensors S1, S2, and/or the second processed measurement data p2MD1=SF2(MD1) and the fourth processed measurement data p1MD2=SF1(MD2) are compared with each other, especially with regard to overlapping measurement ranges and measurement zones of the sensors S1 and S2 and especially to test the sensor functions of the sensors S1, S2.

In more detail, to generate the third processed measurement data p2MD2=SF2(MD2) and the fourth processed measurement data p1MD2=SF1(MD2),the first computing unit CU1 and the second computing unit CU2 are configured such that the second computing unit CU2 receives second measurement data MD2 from the sensor SEN2 assigned to the second computing unit CU2, the second computing unit CU2 executes its safety function SF2 to process the second measurement data MD2 to generate third processed measurement data p2MD2=SF2(MD2), the second measurement data MD2 are shared with the first computing unit CU1, the first computing unit CU1 executes its safety function SF1 to process the second measurement data MD2 to generate fourth processed measurement data p1MD2=SF1(MD2).

For example, in case the comparison shows that the compared instances deviate from each other by more than a given threshold, e.g. 10%, the adjustment of a respective control signal of a concerned computing unit CUi can be triggered.

In the simplest embodiment, the values of the processed measurement data p1MD1, p1MD2, p2MD1, p2MD2 can be of Boolean type, e.g. "safe" and "unsafe".

The comparisons can be performed by CPUs of the individual computing units CUi. For that, the various processed measurement data p1MD1, p1MD2, p2MD1, p2MD2 have to be transferred via the communication connection 112 between the computing units CUi, CUj as necessary. As an alternative, the various processed measurement data p1MD1, p1MD2, p2MD1, p2MD2 can be transferred via the communication connection 112 to a central CPU (not shown) of the computation system 111 and the comparisons are performed there.

In another example, in case the computation system 111 has more than two computing units CUi, a failure of one computing unit can be compensated by one of the other computing units CUj. In a preferred implementation, a failure of one computing unit CUi in a pair PCUij of computing units consisting of CUi and CUj with i≠j, e.g. i=1 and j=2, is recognized by any other computing unit CUk with k≠i and k≠j not belonging to the pair PCUij, e.g. k=3, by comparing the outputs Oi, Oj of the pair PCUij, i.e. the respective output data ODi, ODj. For example, ODi=pi(MDi) and ODj=pj(MDj) can be compared and in regular state such output data ODi, ODj would typically be within a given range, possibly but not necessarily ODi=ODj. In general terms, a relationship between output data ODi, ODj of a pair PCUij of computing units CUi, CUj is assumed to be known in case the computing units CUi, CUj are in a normal state of operation, i.e. not erroneous or similar. In case such expected relationship between ODi and ODj is not fulfilled, the aforementioned safe mode might be required. For example, the concerned pair PCUij could then neutralize itself, for example by denying itself access to the actuators connected with its computing units CUi, CUj. The other computing unit CUk not belonging to the pair PCUij could then assume control of the actuators ACTi, ACTj originally controlled by the computing units CUi, CUj of the pair PCUij. In a preferred embodiment, the computing unit CUk not belonging to the pair PCUij is itself a member of another pair PCUkl with l≠i, l≠j, and l≠k, e.g. k=3 and 1=4, which would assume control of the actuators ACTi, ACTj originally controlled by the failing pair PCUij. If the pair PCUkl assuming control of the actuators ACTi, ACTj is the last pair of the computation system 111, the performance of the device 100 controlled by the computation system 111 and by the device control system 110, respectively, can be degraded to address the absence of a fallback or end the mission safely.

In a possible application, the output O1 of the first computing unit CU1 and the output O2 of the second computing unit CU2 are connected to the third computing unit CU3 and its input 13, respectively, e.g. via the communication connection 112, wherein the computation system 111 is configured such that the third computing unit CU3 is deactivated in case of concurrent pre-defined states of the outputs O1, O2 of the first CU1 and second computing units CU2. I.e. in case the output O1 of CU1 is in a given, predefined status and value, respectively, and at the same time the output O2 of CU2 is also in a given, predefined status and value, respectively, the third computing unit CU3 would be deactivated. In a preferred embodiment, this scheme would be applied with the computing units CU1 and CU3 being able to achieve deactivation of the computing unit CU2 and with the computing units CU2 and CU3 being able to achieve deactivation of the computing unit CU1 in such situations of presence of concurrent predefined states.

For example, the deactivation can be achieved be deactivating the energy supply ENEe supplying the third computing unit CU3. In that case, the outputs O1, O2 of the first and the second computing unit CU1, CU2 are connected to the power supply of the third computing unit CU3 and the power supply of the third computing unit CU3 is deactivated in case of concurrent pre-defined states of the outputs of the first and second computing units.

Therein, each one of the pre-defined states can be a so called "high status", i.e. in case the status of both the first and the second computing unit is a high status, the power supply and, therewith, the third computing unit is deactivated. Such "high status" is a term and principle, respectively, which is well established in industrial systems and practice. It concerns the digital output of a component of an industrial system which is typically a voltage of 24V, 12V, or 5V, as the case may be. Such status is typically fixed by a CPU of the computing unit.

The deactivation of the third computing unit in case the outputs O1, O2 of both the first and second computing unit CU1, CU2 are in "high" status, for example, achieves even higher safety. In a preferred embodiment, this deactivation is used to deactivate a malfunctioning computing unit CUi as recognized by two other computing units CUj, CUk concurrently, removing an erroneous signal of the malfunctioning computing unit CUi from corresponding actuators and allowing a correct signal from at least one of the two other computing units CUj, CUk to control the actuator.

The device control system 110 can be configured to execute a test mode in which instead of real measurement data MD1 and MD2, respectively, a first test pattern PAT1 is fed as measurement data MD1=PAT1 to the first computing unit CU1, the first computing unit CU1 is configured to execute its safety function SF1 to process the first test pattern PAT1 to generate a second test pattern PAT2=p1PAT1=SF1(PAT1), and the second test pattern PAT2 is used by the second computing unit CU2 to detect inconsistency of the first computing unit CU1.

Such a test pattern PAT1 can be artificial or previously measured sensor measurement data corresponding to measurement data MD1 which a sensor SEN1 which is assigned to computing unit CU1 would provide in a given scenario. For example, PAT1 can represent a case in which sensor SEN1 detects an obstacle in its measurement range and measurement zone. Such test pattern PAT1 might represent a potentially dangerous situation which requires the computing unit(s) to initiate adjustment of the respective actuator control signal(s). It might also provide test objects to be recognized, classified and distances approximated, for example in the case of a digital camera picture or a sequence of digital camera pictures. These test patterns PAT are particularly useful for testing the integrity of one computing unit CUi by another computing unit CUj in regular operation but can also be used in a test mode or for a computing unit CUi to verify its own integrity.

Such a test pattern PAT1 can also be introduced to the computing units CUi by a defined, known situation in the environment (so-called "known ground truth"). This can be achieved by bringing the device 100, for example the mobile robot or cobot, into a testing setup where certain environmental situations can be triggered, for example by showing a camera-based sensor selected pictures on a screen or by quickly moving an obstacle at a predetermined distance into the detection field of an ultrasonic sensor. More refined testing patterns may include moving pictures on screens instead of stills, and objects moving at varying speeds through the detection area of LIDAR / ultrasonic or other time-of-flight sensors. The known situation can also be achieved by moving a mobile robot through a known area with known features, such as for example a support column or a traffic light. Similarly, a cobot may be moved close to its fixture to see whether collision with the fixture would be detected. Finally, the known situation could feature other entities controlled by computing units CUj similar to the ones described above. For example, two moving robots could move towards each other at a known speed, the test being whether the safety functions on both robots calculate the same distance and gauge the speed correctly. This final setup requires communication between a central control unit and the robots involved or at least communication between the robots. Similar situations can be designed for cobots on fixed sites if the sites are close enough to each other for one cobot's sensors to pick up the other cobot's movements and position.

The test patterns in this paragraph are particularly well-suited for use in a test mode, but can partially also be used in regular operations.

Consequently, the first test pattern PAT1 is the equivalent of the result of a possible measurement by sensor SEN1. In practice, the first pattern PAT1 is equivalent in size to a cyclical sensor measurement and it is stored on the first computing unit CU1 at a specific location in its memory.

Additionally, the second pattern PAT2 may also be chosen equivalent in format and size to the result of the execution of the safety function SF1 with the first test pattern PAT1, i.e. so that PAT2=SF1(PAT1) can be falsified, but the contents would be such that PAT2=SF1(PAT1) is false. Independent from whether the first pattern PAT1 represents a dangerous situation or not, it can be used to detect inconsistency by the second computing unit CU2 as long as the second pattern PAT2 is inconsistent with the first pattern. The goal is to achieve that the second computing unit CU2 detects the inconsistency so that the first computing unit CU1 may verify that it is still being effectively monitored by the second compute unit. For example, this can be achieved by the first computing unit CU1 examining the output of the second computing unit CU2 whether it shows a safe or an unsafe state.

Furthermore, the system can be configured such that the second computing unit CU2, after receiving the first PAT1 and second pattern PAT2, transmits to the first computing unit CU1 in a first cycle a datum signaling an intention to switch the output of the second computing unit CU2 which is connected to an actuator. The first computing unit CU1 is then configured to switch its output connected to an actuator if no such datum is received. In an alternative embodiment, the second computing unit CU2 would transfer only a datum indicating that it has determined the first computing unit to be erroneous; in this embodiment, absence of such a datum would cause the first computing unit CU1 to determine the second computing unit CU2 to be erroneous and to take action, for example applying a brake to enter a safe state or signal a human controller.

The device control system 110 can be configured to execute a check mode in which the sensor system 130 is subjected to a sensory stimulus from the device's environment such that the sensors SENs provide measurement data MDs=PAT1 corresponding to the sensory stimulus to the computing units CUi. Each computing unit CUi executes its safety function SFi to process the provided measurement data MDi=PAT1 to generate processed measurement data piMDi=SFi(MDi)=SFi(PAT1) and generates an adjustment for the one or more control signals for controlling the one or more actuators of the actuator system according to the computing unit's CUi generated processed measurement data piMDi=SFi(Mdi)=Sfi(PAT1). The device control system 110 is further configured to initiate a safety measure in case the adjustments of only less than two computing units CUi are exceeding a given threshold. It could also be configured so that it initiates a safety measure in case the adjustment of any CUi remains under the threshold.

In case the adjustment is a concrete value for controlling the actuator system, e.g. a voltage or similar, the threshold can be, for example, 5%. Depending on the safety requirements, such threshold can be lower or higher. In case the computing units CUi are not configured to provide a concrete value to the actuator system but only an assessment whether or not an actuation status of the actuator system has to be changed, the threshold would be considered to be exceeded in case such provided assessment of the respective computing unit CUi expresses the necessity to change the actuation status of the actuator system.

The essential aspect herein would be that a number of computing units CUi sufficient for the reliable operation of the safety function show an adequate, i.e. significant reaction to the sensory stimulus which would result in a change of the actuation status. If that is not the case, the safety measure would be initiated. In a straightforward extension, the operation of the device 100 would be restricted in terms of performance ("degraded") until the number of computing units CUi showing an adequate reaction to the sensory stimulus is again sufficient for the reliable operation of the safety function or until a less complex safety function can be used reliably given the number of compute units showing an adequate response. In a simple example, four computing units would analyze data from two front cameras of a fast-moving autonomous robot to identify obstacles and their motion vectors and plan a safe path for the fast-moving autonomous robot. This safety function would be implemented in two heterogeneous, redundant approaches, with each approach being executed on two computing units. Each camera would be connected to a disjoint pair of compute units. Now, if any CU in a pair would not correctly react to a predetermined stimulus, for example a series of pictures of a fast-moving object, the remaining CUs could switch to a mode where they would no longer seek safe, fast paths by first identifying existing motion vectors, but instead move slow enough to stop before any collision and only identify distances to objects.

The device control system 110 can furthermore be configured to execute the check mode concurrently to a regular operation of the device control system 110 so that the regular operation, e.g. an ongoing operation or mission of the device 100, does not have to be interrupted.

The device control system 110 can be configured to execute the check mode such that regular operation of the device 100 after execution of the check mode is enabled only in case the processed measurement data piMDi=SFi(MDi) of at least one computing unit CUi matches with the predefined sensory stimulus. Therein, "matching" is achieved in case the result of the processing piMDi=SFi(MDi) corresponds to an assumed result of such processing which can indeed be assumed since the sensory stimulus is predefined and well known so that the result of the processing can be simulated. In case the processing during check mode deviates from the simuation, regular operation might be critical.

The stimulus might be, for example, a human silhouette or a similar representation of an obstacle which is suddenly placed in the environment of the device with the device control system such that its sensors can detect it. Also, the object to be detected can be another, second device of the same type so that the original device and the second device would detect each other. In case the sensor is a camera, the sensory stimulus can be a video which is presented in from of the sensor camera.

The "regular operation" means that the device operates as per its current regular tasks, e.g. it is not in a test mode, a maintenance mode, a deactivated state etc.

In the above explanations, formulations like "the output O1 of CU1 is in a status..." as well as "comparing the outputs Oi, Oj" should be understood such that each time the output data ODi provided at the respective output Oi are concerned.

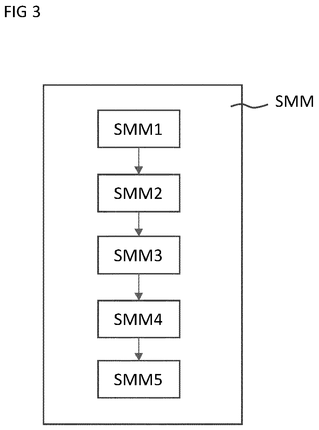

FIG 3 shows the safety monitoring method SMM proposed herein. The method SMM includes a first step SMM1 in which the first computing unit CU1 receives measurement data MD1 from its sensor S1. In a second step SMM2, the first computing unit CU1 shares the data MD1 with the second computing unit CU2. In a third step SMM3, both the first computing unit CU1 and the second computing unit CU2 execute their respective safety functions SF1, SF2 to process the measurement data MD1 to generate first processed measurement data p1MD1=SF1(MD1) and second processed measurement data p2MD1=SF2(MD1), respectively. In a fourth step SMM4, the first processed measurement data p1MD1=SF1(MD1) and the second processed measurement data p2MD1=SF2(MD1) are compared with each other.

In a further embodiment of the safety monitoring method SMM the first step SMM1 additionally includes that the second computing unit CU2 receives measurement data MD2 from its sensor S2. The second step SMM2 additionally includes, that the second computing unit CU2 shares the data MD2 with the first computing unit CU1. The third step SMM3 additionally includes that both the first computing unit CU1 and the second computing unit CU2 execute their respective safety functions SF1, SF2 to process the measurement data MD2 to generate third processed measurement data p2MD2=SF2(MD2) and fourth processed measurement data p1MD2=SF1(MD2), respectively. The fourth step SMM4 additionally includes that the third processed measurement data p2MD2=SF2(MD2) and the fourth processed measurement data p1MD2=SF1(MD2) are compared with each other, and/or the first processed measurement data p1MD1=SF1(MD1) and the third processed measurement data p2MD2=SF2(MD2) are compared with each other, and/or the second processed measurement data p2MD1=SF2(MD1) and the fourth processed measurement data p1MD2=SF1(MD2) are compared with each other.

Thus, the outcome of the safety monitoring method SMM is one or more comparisons of results of the safety functions SF1, SF2 which are based on processing of the measurement data MD1, MD2. In a consequence and fifth step SMM5 of the safety monitoring method SMM, the one or more control signals to the actuators 121, 122 are adjusted according to the one or more results of the mutual comparisons of the first, second, third, and/or fourth processed measurement data.

In the following, the basic concept and background of the solution is further elaborated.

For recurrent tests, the device 100 might bring itself to a testing station, where its sensor system 130 is being fed unsafe patterns or patterns containing certain key elements. Each computing unit CUi monitors itself and possibly the other computing unit CUj for identification of the unsafe situation, or the presence of key results expected due to the presence of the key elements. If the unsafe situation is not identified or the key results not obtained, the computing unit CUi could emit a warning to human operators, continue with reduced performance, e.g. reduced maximum speed, or cease operations entirely. Concretely, the test pattern could consist of a human contour popping up before a mobile robot while the robot travels forward. As an alternative, the test pattern could consist of another autonomous device, for example being of the same type. As a further alternative, the test pattern could consist of a scenario with multiple machines, multiple humans, and multiple stationary obstacles. As a further alternative, the pattern could be dynamic, with elements of the pattern moving to present safe and unsafe configurations.

In an alternative to the device 100 bringing itself to a testing station, if multiple devices operate in an area, the devices could present patterns to each other, possible while in operation. As a concrete example, as a first device 100 detects a second device 100, the first device 100 may maneuver into the second device's 100 path. If the unsafe situation is not identified by all involved computing units CUi of the first device 100, the computing units CUi of the first device 100 could emit a warning to human operators, continue with reduced performance (for example, reduced maximum speed) or cease operations entirely.

For recurrent, in-operation tests of the mutual monitoring using virtual patterns ("operational fault injection") a first computing unit CU1, instead of transferring its input data ID1 via the communication connection 112 to the second computing unit CU2, transfers unsafe patterns or patterns containing certain key elements in one cycle, but not any cycle immediately before or after. Software on the first computing unit CU1 then inspects the output data OD2 from the second computing unit CU2 for key results expected based on the key elements or verifies the identification of the unsafe situation on the second computing unit CU2. A key feature of such an implementation is that any computing unit CUi, when obtaining results based on data Dj received from another computing unit CUj, will have to wait for repetition of each actionable result such as the identification of a nearby obstacle before acting. If the second computing unit CU2 fails to obtain the key result(s), a safe state could be entered, a warning could be emitted, or operation could be continued with reduced performance, e.g. reduced maximum speed or torque.

As a concrete example of an unsafe pattern, the measurement result from a sonar sensor that specifies five meters to the nearest obstacle could be replaced by a measurement result that specifies a distance of five centimeters to the nearest obstacle. The first computing unit CU1 would then verify whether the second computing unit identified the unsafe situation.

As a concrete example of a pattern containing certain key elements, the digital picture frame obtained from a video camera could be replaced by a digital picture frame taken earlier of a human at five meters distance and no other objects. The first computing unit could then inspect the output of the second computing unit for the detection of a human at five meters distance and the absence of other objects.

The solution provided herein leverages high-performance computing units, both on the hardware and software side, with full capabilities in terms of I/O, such as UARTs, Ethernets, and GPIOs.

While it is possible in theory to prove the correctness of high-performance computing units and platforms, respectively, no actual promising attempt has been made in prior art. Safety functions are limited in practice to low-performance, special-purpose hardware such as lockstep processors or industrial controllers that can only be programmed in limited-variability languages. Complex algorithms are supplemented by simple algorithms leading to simple safe behavior. The solution provided herewith enables behavior as complex as the computational power of the weaker compute platform allows. Furthermore, the solution provided herewith significantly simplifies the development of safety functions since the development of two heterogeneous safety functions is usually easier than the development of one safety functions with proof of correctness. In the case of safety functions relying on neural networks or similar schemes, proof of correctness may be impossible due to the dominant pattern problem.

The solution also enables the use of complex sensor input data. With typical, proven-correct sensors today, sensor output is limited to simple data such as "safe", warning", "unsafe", limiting safety functions on powerful computing platforms to what the sensor's logic can do.

In a concrete example, the device 100 can be an autonomous mobile robot which can be equipped with lidar safety scanners as a first sensor SEN1, safety encoders to measure the position and rotation of the wheels as a second sensor SEN2, a safety CPU, an IPC, safe brakes as a first actuator ACT1, and a safe motor drive as a second actuator ACT2. The lidar safety scanners can have digital outputs connected to the safety CPU, the safety encoders can be connected to the safety CPU via safety serial interfaces. The safety CPU can engage the safe brakes via redundant 24V outputs and remove torque from the motor drive using a similar setup. The IPC can be connected to the safety scanner and the safe motor drive using an Ethernet-type interface, and to the safe brakes using an analog output. The IPC's control of the safe actuators can be overridden in case of an unsafe situation by the safety CPU. The safety CPU can only perform very basic functions, such as setting warning and alarm distances on the lidar. Situations such as following a mobile robot travelling in the same direction cannot be optimized, for example, the robot would observe the same safety distance from a robot travelling in the same direction as from a robot coming on head-on.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments but variations can be derived by a person skilled in the art without deviation from the scope of the invention.

## Claims

1. A device control system (110) for controlling a device (100), comprising a heterogeneous, redundant computation system (111) for controlling one or more actuators ACTa of an actuator system (120) of the device (100), wherein
- the computation system (111) comprises at least a first CU1 and a second computing unit CU2 and
- all computing units CU1, CU2 of the computation system (111) are connected to the actuator system (120) for providing respective one or more control signals for controlling the actuators ACTa of the actuator system (120) .

2. A device control system (110) according to claim 1, wherein the first computing unit CU1 and a second computing unit CU2 are connected
- to the same actuator ACTa of the actuator system (120) for providing respective control signals for controlling the actuator ACTa and/or
- to different actuators ACTa, ACTb of the actuator system (120) for providing respective control signals to the different actuators ACTa, ACTb for controlling the actuators ACTa, ACTb, wherein the different actuators ACTa, ACTb are redundant actuators.

3. A device control system (110) according to any one of claims 1 to 2, wherein the computation system (111) comprises at least a third computing unit CU3, wherein an output O1 of the first computing unit CU1 and an output O2 of the second computing unit CU2 are connected to an input I3 of the third computing unit CU3 to share respective states of the first computing unit CU1 and the second computing unit CU2, wherein the computation system (111) is configured such that the third computing unit CU3 is deactivated in case of concurrent predefined stati of the outputs O1, O2 of the first CU1 and second computing units CU2.

4. A device control system (110) according to any one of claims 1 to 3, wherein
- at least one output O1 of the first computing unit CU1, which is connected to the actuator system (120) for providing the respective control signal, is connected to at least one input I2 of the second computing unit CU2,
- the second computing unit CU2 is configured to observe a status of the output O1 of the first computing unit CU1 and to initiate a safety measure in case the observed status of the output O1 deviates from an expected status and/or enters a predefined status.

5. A device control system (110) according to claim 4, wherein the device control system is configured to temporarily switch the status of the output O1 of the first computing unit CU1 to the predefined status, wherein the predefined status is selected such that it would cause the actuator system (120) to change its actuation status, wherein such temporary switching is executed, preferably during regular operation of the device control system (110),
- sufficiently short in time, so that it does not cause the actuator system (120) to change its actuation status, and
- sufficiently long lasting, so that the second computing unit CU2 can detect that the output O1 is in the predefined status.

6. A device control system (110) according to any one of claims 4 to 5, wherein the device control system (110) is configured to execute a testing mode in which
- the computation system (111) is configured to switch the status of the output O1 of the first computing unit CU1 to a safe state, wherein such safe state represents the expected status,
- the second computing unit CU2, observing the first computing unit CU1 and its output O1, is configured to initiate the safety measure in case the observed status of the output O1 does not correspond to a safe state.

7. A device control system (110) according to any one of claims 1 to 6, wherein each computing unit CUi with i=1,2,... is configured to generate output data ODi by executing a respective comprehensive safety function SFi, wherein
- the safety function SFi of a respective computing unit CUi processes input data IDi provided to the respective computing unit CUi to generate the respective output data ODi,
- each comprehensive safety function SFi contains one or more sub-safety-functions SFi_y with y=1,2...,Yi and Yi≥1 for a respective computing unit CUi, which are executed to process the input data IDi to generate the output data ODi,
- the respective sub-safety-functions SFi_y of that computing unit CUi are selected from a group of homogeneous sub-safety-functions and/or from a group of heterogeneous, redundant sub-safety-functions.

8. A device control system (110) according to claim 7, wherein the computing units CUi are configured to generate the one or more control signals for controlling the actuators ACTa of the actuator system (120) as a function of the output data ODi generated by the respective safety function SFi.

9. A device control system (110) according to any one of claims 1 to 8, comprising a sensor system (130) with a plurality of sensors SENs with s=1,2,...,S and with S being the total number of sensors SENs of the sensor system (130), wherein
- the sensors SENs are configured to provide measurement data MDs and wherein
- the computing units CUi of the computation system (111) are connected to the sensor system (130) via one or several data connections 114 for receiving the measurement data MDi from one or more sensors SENs of the sensor system (130) being assigned to the respective computing unit CUi,
wherein different computing units CUi of the computation system (111) are preferably assigned to different sensors SENs of the sensor system (130) to receive measurement data MDi from the sensors SENs as input data for the respective computing unit CUi.

10. A device control system (110) according to any one of claims 1 to 9, wherein each computing unit CUj is configured to share data Dj, preferably a representation RMDj of the measurement data MDj received by the respective computing unit CUj from the sensor system (130), with other computing units CUi with i≠j of the computation system (111).

11. A device control system (110) according to any one of claims 7 to 8 and any one of claims 9 to 10, wherein each computing unit CUi is configured to execute its safety function SFi
- to process measurement data MDi received from the sensor system (130) to generate processed measurement data piMDi=SFi(MDi) and/or
- to process data Dj with j≠i shared by an other computing unit CUj of the computation system (111) to generate further processed measurement data piDj=SFi(Dj), with Dj preferably being a representation RMDj of the measurement data MDj received by the other computiung unit CUj.

12. A device control system (110) according to any one of claims 7 to 8 and any one of claims 9 to 10, wherein the first computing unit CU1 and the second computing unit CU2 are configured such that both the first computing unit CU1 and the second computing unit CU2 execute their respective safety functions SF1, SF2 to process measurement data MD1 received by the computation system (111) from a sensor SEN1 of the sensor system (130) assigned to the first computing unit CU1 to generate first processed measurement data p1MD1=SF1(MD1) and second processed measurement data p2MD1=SF2(MD1), respectively, wherein the first processed measurement data p1MD1=SF1(MD1) and the second processed measurement data p2MD1=SF2(MD1) are compared with each other.

13. A device control system (110) according to claim 12, wherein the first computing unit CU1 and the second computing unit CU2 are furthermore configured such that both the first computing unit CU1 and the second computing unit CU2 execute their respective safety functions SF1, SF2 to process measurement data MD2 received by the computation system (111) from a sensor SEN2 assigned to the second computing unit CU2 to generate third processed measurement data p2MD2=SF2(MD2) and fourth processed measurement data p1MD2=SF1(MD2), respectively, wherein
- the third processed measurement data p2MD2=SF2(MD2) and the fourth processed measurement data p1MD2=SF1(MD2) are compared with each other, and/or
- the first processed measurement data p1MD1=SF1(MD1) and the third processed measurement data p2MD2=SF2(MD2) are compared with each other, and/or
- the second processed measurement data p2MD1=SF2(MD1) and the fourth processed measurement data p1MD2=SF1(MD2) are compared with each other.

14. A device control system (110) according to any one of claims 12 to 13, wherein the one or more control signals for controlling the one or more actuators ACTa of the actuator system (120) are adjusted according to the one or more results of the mutual comparisons of the first, second, third, and/or fourth processed measurement data.

15. A device control system (110) according to any one of claims 1 to 14, wherein the device control system (110) is configured to execute a check mode in which the sensor system (130) is subjected to a predefined sensory stimulus from the device's (100) environment such that the sensors SENs provide measurement data MDs=PAT1 corresponding to the sensory stimulus to the computing units CUi, wherein each computing unit CUi
- executes its safety function SFi to process the provided measurement data MDi=PAT1 to generate processed measurement data piMDi=SFi(MDi)=SFi(PAT1) and
- generates an adjustment for the one or more control signals for controlling the one or more actuators ACTa of the actuator system (120) according to the computing unit's CUi generated processed measurement data piMDi=SFi(Mdi)=SFi(PAT1),
wherein the device control system (110) is further configured to initiate a safety measure in case the adjustments of less than two computing units CUi are exceeding a given threshold.

16. A device control system (110) according to claim 15, wherein the device control system (110) is configured to execute the check mode concurrently to a regular operation of the device control system (110).

17. A device control system (110) according to claim 15 or 16, wherein the device control system (110) is configured to execute the check mode such that regular operation of the device (100) after execution of the check mode is enabled only in case the processed measurement data piMDi=SFi(MDi) of at least one computing unit CUi matches with the predefined sensory stimulus.

18. A device control system (110) according to any one of claims 1 to 17, wherein the device control system (110) is configured to execute a test mode in which
- a first test pattern PAT1 is fed as measurement data MD1=PAT1 to the first computing unit CU1,
- the first computing unit CU1 is configured to execute its safety function SF1 to process the first test pattern PAT1 to generate a second test pattern PAT2=p1PAT1=SF1(PAT1), and
- the second test pattern PAT2 is shared with the second computing unit CU2 to detect an inconsistency of the first computing unit CU1.

19. Safety monitoring method SMM for controlling a device according to any one of claims 1 to 18, comprising
- a first step SMM1 in which the first computing unit CU1 receives measurement data MD1 from its sensor S1,
- a second step SMM2 in which the first computing unit CU1 shares the data MD1 with the second computing unit CU2,
- a third step SMM3 in which both the first computing unit CU1 and the second computing unit CU2 execute their respective safety functions SF1, SF2 to process the measurement data MD1 to generate first processed measurement data p1MD1=SF1(MD1) and second processed measurement data p2MD1=SF2(MD1), respectively,
- a fourth step SMM4 in which the first processed measurement data p1MD1=SF1(MD1) and the second processed measurement data p2MD1=SF2(MD1) are compared with each other,
- a fifth step SMM5 in which the one or more control signals to the actuators are adjusted according to the result of the mutual comparison of the first and the second processed measurement data.

20. Safety monitoring method SMM according to claim 19, wherein
- the first step SMM1 additionally includes that the second computing unit CU2 receives measurement data MD2 from its sensor S2,
- the second step SMM2 additionally includes, that the second computing unit CU2 shares the data MD2 with the first computing unit CU1,
- the third step SMM3 additionally includes that both the first computing unit CU1 and the second computing unit CU2 execute their respective safety functions SF1, SF2 to process the measurement data MD2 to generate third processed measurement data p2MD2=SF2(MD2) and fourth processed measurement data p1MD2=SF1(MD2),respectively,
- the fourth step SMM4 additionally includes that the third processed measurement data p2MD2=SF2(MD2) and the fourth processed measurement data p1MD2=SF1(MD2) are compared with each other, and/or the first processed measurement data p1MD1=SF1(MD1) and the third processed measurement data p2MD2=SF2(MD2) are compared with each other, and/or the second processed measurement data p2MD1=SF2(MD1) and the fourth processed measurement data p1MD2=SF1(MD2) are compared with each other,
- the fifth step SMM5 additionally includes that the one or more control signals to the one or more actuators are adjusted according to the one or more results of the mutual comparisons of the first, second, third, and/or fourth processed measurement data.
